# FASCICULE DE BREVET EUROPEEN

(11) **EP 3 230 031 B1**
(45) Date de publication et mention de la délivrance du brevet: **27.03.2019**
(21) Numéro de dépôt: 15823616.6
(22) Date de dépôt: 08.12.2015
(51) Int. Cl.: B29B 15/12

(54) **INSTALLATION D'IMPRÉGNATION D'UN SUPPORT POREUX COMPRENANT DES ÉLECTRODES REVÊTUES OPTIMISÉES**
VORRICHTUNG ZUM IMPRÄGNIEREN EINES PORÖSEN MEDIUMS MIT OPTIMIERTEN BESCHICHTETEN ELEKTRODEN
APPARATUS FOR IMPREGNATING A POROUS MEDIUM COMPRISING OPTIMIZED COATED ELECTRODES

(30) Priorité: 09.12.2014 FR 1462137
(43) Date de publication de la demande: 18.10.2017
(73) Titulaire: Fibroline, 69130 Ecully (FR)
(72) Inventeur: MARDUEL, Joric, 69380 Chazay D'azergues (FR)
(74) Mandataire: Cabinet Laurent & Charras
(86) Numéro de dépôt international: PCT/FR2015/053379
(87) Numéro de publication internationale: WO 2016/092205

(56) Documents cités:
- EP-A1- 1 526 214
- WO-A1-2010/001043

## Description

### DOMAINE DE L'INVENTION

L'invention concerne une installation d'imprégnation d'un support poreux par de la poudre, par application d'un champ électrique. Elle vise plus particulièrement une installation permettant l'imprégnation d'un support poreux, comme par exemple un non tissé ou un tissu, un papier, voire une mousse à cellules ouvertes.

### ETAT ANTERIEUR DE LA TECHNIQUE

Il est connu de l'état de la technique différents types de procédé d'imprégnation d'un support poreux par de la poudre. Ils permettent de fonctionnaliser le support selon son utilisation. A titre d'exemple, on peut citer l'imprégnation d'un textile par de la poudre hydrophobe permettant la confection de vêtements de meilleure imperméabilité, ou bien l'imprégnation d'une poudre de type thermoliante dans un tapis non-tissé aiguilleté, de manière à favoriser la cohésion des fibres le composant après un traitement thermique approprié du tapis. Bien entendu, les techniques d'imprégnation sont utilisées dans de nombreux autres domaines techniques, comme par exemple l'automobile, la santé, l'environnement, etc.

Le document WO 99/22920 décrit un exemple d'installation d'imprégnation d'un support poreux, par application d'un champ électrique alternatif. L'installation comprend deux plaques métalliques disposées en vis-à-vis, de sorte à former un passage pour le support poreux. Celui-ci est préalablement saupoudré par de la poudre avant son passage entre les plaques. Un générateur de tension est relié aux plaques de manière à générer un champ électrique alternatif entre lesdites plaques pour permettre le déplacement de la poudre entre le système d'électrodes et le cas échéant dans le support. Les surfaces des plaques en regard sont recouvertes par un écran de verre afin de prévenir la formation d'arcs électriques entre les électrodes. Il a été constaté rapidement après la mise en marche de l'installation, l'apparition brutale de points de rupture dans les écrans, entraînant leur claquage ou leur rupture diélectrique. Il est alors nécessaire de changer les écrans de verre relativement souvent pour prévenir ce phénomène de claquage. Cette périodicité est d'autant plus élevée que l'amplitude du champ électrique entre les plaques métalliques est importante.

Pour ralentir ce phénomène de vieillissement et donc diminuer les interventions sur l'installation, le document FR 2 933 327 propose de remplacer chaque plaque métallique par des bandes conductrices, agencées successivement et séparées par des lames d'air. Il a été constaté que les écrans de verre sont dégradés plus lentement pour des conditions identiques d'utilisation. Cette meilleure tenue au vieillissement semble liée aux moindres contraintes électriques exercées par les arcs électriques sur les écrans de verre. En contrepartie, le champ électrique est moins intense au niveau des surfaces des écrans de verre non recouvertes par les bandes conductrices. De ce fait, le champ électrique entre les écrans de verre n'est pas homogène. Il est alors nécessaire d'allonger la longueur des électrodes pour compenser cette inhomogénéité et/ou de réduire la vitesse de défilement d'un support poreux entre les écrans de verre pour obtenir une imprégnation d'une poudre dans ledit support, comparable à une imprégnation obtenue dans les mêmes conditions avec une installation décrite ci-dessus. Un exemple similaire d'installation, incluant des électrodes tubulaires est décrit dans le document EP 1 526 214.

Certains supports poreux présentent une conductivité électrique critique et/ou un taux d'humidité relative important, comme par exemple les textiles à base de fibres naturelles ou cellulosique. Ils nécessitent alors l'utilisation de champs électriques d'amplitude plus élevée pour contrer l'atténuation du champ électriques dans ce type de matériaux. Le Demandeur a constaté que de ce fait, l'inhomogénéité du champ électrique entre les électrodes et le phénomène de claquage des écrans de verre mentionnés ci-dessus sont plus importants, en particulier sous humidité élevée.

En d'autres termes, il semble que l'augmentation de l'humidité soit préjudiciable à la bonne qualité, et notamment l'homogénéité du champ électrique entre les électrodes.

La présente demande vise à proposer une installation d'imprégnation d'un support poreux par de la poudre, présentant une meilleure tenue au vieillissement et permettant la formation d'un champ électrique plus homogène pour favoriser une imprégnation plus régulière de la poudre dans le support poreux.

### EXPOSE DE L'INVENTION

La présente invention propose une installation d'imprégnation permettant de résoudre les problèmes techniques mentionnés ci-dessus lorsque le champ électrique est d'amplitude importante, et plus particulièrement lorsque cette amplitude atteint un niveau permettant l'ionisation de l'air ou d'un gaz présent entre les électrodes, visible sous la forme d'un plasma.

Pour cela, l'installation comprend un dispositif apte à générer un champ électrique alternatif à travers un support poreux, le dispositif comporte au moins une première électrode et au moins une deuxième électrode disposées de part et d'autre dudit support ou du trajet dudit support.

L'invention se caractérise en ce que :
- la première électrode est recouverte par un écran venant au contact de l'électrode, ledit écran présentant une rigidité diélectrique supérieure à 6kV/mm, et préférentiellement supérieure à 9 kV/mm ;
- la deuxième électrode est recouverte directement ou indirectement par une couche de protection, ladite couche de protection étant solidaire de cette deuxième électrode et présentant une résistivité superficielle supérieure à 1x10¹²Ω/□, quel que soit le taux d'humidité relative, et notamment au-delà de 70%.

Ainsi, l'invention consiste à recouvrir chaque électrode par au moins une couche qui présente des propriétés complémentaires. Cette combinaison permet la formation d'un champ électrique homogène entre les électrodes, particulièrement lorsque l'amplitude du champ électrique est importante et/ou que l'humidité relative entre les électrodes est élevée.

Afin de permettre l'établissement d'un champ électrique d'amplitude élevée entre les électrodes, la première électrode est recouverte par un écran comprenant une rigidité diélectrique élevée, c'est-à-dire supérieure à 6kV/mm, voire 9 kV/mm.

L'écran au contact de la première électrode peut être réalisé à partir d'un matériau diélectrique comme par exemple : le verre, le quartz, l'alumine, les mulites, la stéatite, le mica ...

Pour améliorer l'homogénéité du champ électrique entre les électrodes, une couche de protection recouvre la deuxième électrode. On rappelle que la résistivité superficielle correspond à la résistance superficielle mesurée entre deux électrodes de longueur égale à leur espacement. Le fait que la résistivité superficielle corresponde à une résistance, elle s'exprime dans la même unité qu'une résistance. Mais pour éviter toute confusion, l'unité utilisée est l'Ω.cm/cm, ou comme dans la suite de la présente Demande en ohms par carré, ou Ω/□, rappelant ainsi qu'il s'agit de la résistance mesurée entre deux côtés opposés d'un carré. En raison de sa résistivité superficielle électrique élevée qui est supérieure à 1x10¹² Ω/□, la différence de potentiel entre les électrodes peut être reproduite de façon plus fidèle car, les charges électriques se déplacent plus difficilement sur la surface de la couche de protection. Elles se répartissent donc conformément à la géométrie de la deuxième électrode. Il est ainsi possible de générer plus facilement un champ électrique homogène entre la première et la deuxième électrode, spécialement lorsque le champ électrique est d'amplitude importante.

On a constaté un déplacement limité des charges électriques à la surface de la couche de protection lorsque cette dernière présente une résistivité superficielle supérieure à 1x10¹² Ω/□. Etant donné que la capacité à homogénéiser le champ électrique dépend de la résistivité de surface de la couche de protection, l'épaisseur de cette dernière a peu d'influence et peut varier de quelques centièmes à plusieurs millimètres.

Un autre avantage lié à la couche de protection est de préserver l'intégrité de l'installation plus longtemps en limitant le déplacement des charges électriques à la surface de la couche de protection. Les charges électriques sont de ce fait moins susceptibles de s'agglomérer et de favoriser la formation de décharges électriques entre lesdites électrodes. Par les termes « décharges électriques », on entend des décharges électriques ponctuelles se produisant entre les électrodes et apparaissant visuellement sous la forme d'un filament lumineux plus intense. Ces décharges électriques ont pour inconvénient de solliciter électriquement et thermiquement les couches recouvrant les électrodes, en formant des points chauds à leur surface favorisant un vieillissement plus rapide desdites couches.

La couche de protection permet ainsi l'établissement d'un champ électrique homogène dans l'installation, favorisant la formation d'un plasma homogène lorsque l'amplitude du champ électrique est suffisante pour ioniser l'air entre la première et la seconde électrode. La présence de ce plasma est influencée également par différents paramètres comme par exemple le type de gaz, sa pression, la fréquence et l'amplitude du champ électrique entre les électrodes.

Le Demandeur a par ailleurs identifié que la couche de surface des électrodes peut être soumise à des élévations ponctuelles de température, dues à des concentrations de charges, engendrées par la présence de singularités présentes dans le matériau à traiter. Il peut par exemple s'agir de variations d'épaisseur, ou la présence d'impuretés dans le matériau fibreux soumis au champ électrique. Ces élévations de température peuvent être jugulées par l'emploi de matériaux en particulier pour la couche de protection présentant une bonne stabilité thermique, c'est-à-dire qui conservent leur propriétés structurelles et par conséquent électriques au-delà d'un seuil de température, typiquement de l'ordre de 250°C. Bien entendu, les propriétés électriques, notamment de rigidité diélectrique des couches caractéristiques doivent être supérieures au seuil prédéfini de 6kV/mm.

Par rapport aux installations de l'art antérieur, cette meilleure homogénéité du champ électrique entre les électrodes autorise l'emploi de tensions d'amplitudes supérieures permettant de façon avantageuse de réaliser des imprégnations plus rapides, plus profondes et cela sans engendrer un vieillissement précoce des couches recouvrant les électrodes, et plus particulièrement l'écran recouvrant la première électrode. En effet, dans les installations connues, dans lesquels les électrodes sont recouvertes de matériaux tels que le verre, voire la céramique, la résistance superficielle est connue pour chuter en dessous de 10¹⁰ Ω/□, voire 10⁹ Ω/□ lorsque le taux d'humidité relative dépasse 70% ou 80%.

La couche de protection peut être formée à partir de matériaux polymériques, comme par exemple un matériau appartenant à la famille des polyimides, des polyéthercétones, des silicones ou des polymères fluorés. Ces matériaux peuvent être pris seuls, en mélange ou renforcés et peuvent se présenter sous forme d'un film préexistant ou d'une surcouche déposée sur la deuxième électrode.

La valeur du champ électrique entre la première et la deuxième électrode peut être comprise entre 0,1 et 50 kV/mm, de préférence entre 0,5 et 30kV/mm. Dans ces plages de valeurs, la fréquence du champ électrique peut être comprise entre 1 et 1000 Hz, de préférence entre 10 et 300 Hz.

Eventuellement, afin de renforcer le caractère homogène du champ électrique entre la première et la deuxième électrode, on peut envisager de recouvrir par une couche de protection telle que décrite ci-dessus l'écran au contact de la première électrode. En d'autres termes, l'écran peut être recouvert par une couche de protection de sorte que les faces opposées de l'écran soient au contact de l'électrode et de la couche de protection. La première électrode peut donc être recouverte par un multicouche comprenant un écran et une couche de protection.

Selon une variante de réalisation, pour augmenter la rigidité diélectrique de la deuxième électrode et ainsi permettre d'accroître l'amplitude du champ électrique entre lesdites électrodes grâce à une meilleure isolation électrique, on peut envisager d'interposer un écran tel que décrit ci-dessus entre la deuxième électrode et la couche de protection. En d'autres termes, la deuxième électrode peut être recouverte par un multicouche comprenant un écran et une couche de protection, pour former un ensemble compact, exempt de lame d'air à l'intérieur de laquelle pourrait se former du fait d'une humidité résiduelle, un milieu fortement ionique assimilable à un plasma.

De façon similaire, pour améliorer l'homogénéité du champ électrique entre les électrodes, une couche de protection telle que décrite ci-dessus peut recouvrir les écrans au contact de la première et de la deuxième électrode. Autrement dit, la première et la deuxième électrode peuvent être recouvertes par un même multicouche tel que décrit ci-dessus, et former deux empilements de couches solidaires mécaniquement, et sans lame d'air, afin de former un milieu continu exempt de lame d'air, sans possibilité d'apparition de phénomènes d'ionisation gazeuse au sein même de l'empilement de couches.

Eventuellement, une installation d'imprégnation décrite ci-dessus peut comprendre un dispositif spécifique permettant de réduire le taux d'humidité entre la première et la deuxième électrode. On a constaté de façon avantageuse une amélioration de l'homogénéité du champ électrique lorsque le taux d'humidité est réduit dans l'installation. Cette amélioration est notable en-dessous de 60% d'humidité relative et devient importante en-dessous de 50% d'humidité relative. On a par exemple constaté qu'un plasma homogène obtenu avec un taux de 45% d'humidité relative dans une installation selon l'état de la technique, peut être obtenu avec un taux de 65% d'humidité relative dans une installation selon l'invention. La couche de protection permet de façon avantageuse l'établissement d'un champ électrique homogène et stable entre la première et la deuxième électrode, même quand le taux est égal ou supérieur à 60% d'humidité relative dans l'installation. Toutefois, on notera que les installations doivent pouvoir fonctionner correctement sous une humidité plus élevée, en fonction de leur emplacement géographique, et des variations des conditions météorologiques.

En pratique, la mesure du taux d'humidité relative se fait de préférence après un temps permettant aux électrodes d'atteindre une température stabilisée, et au milieu présent entre les électrodes d'être dans un état stable en ce qui concerne les paramètres de température et pression.

L'installation peut comprendre un dispositif d'entraînement du support poreux, permettant le passage dudit support entre les électrodes de l'installation. La présence d'une couche de protection sur une électrode de l'installation permet la génération d'un champ électrique plus homogène entre les électrodes lorsque l'amplitude du champ électrique augmente. De ce fait, le temps de présence d'un support poreux dans l'installation peut être réduit en augmentant la valeur du champ électrique, sans pour autant dégrader l'homogénéité de son imprégnation. Ainsi, les temps de traitement du support poreux peuvent être réduits à quelques dixièmes de secondes pour l'imprégnation de papiers ou de non-tissés d'hygiène par exemple, alors qu'ils sont actuellement de plusieurs secondes. De ce fait, la vitesse de déplacement d'un support poreux peut être supérieure dans une installation selon la présente que dans une installation selon l'art antérieur, pour une imprégnation identique ou similaire du support poreux.

Eventuellement, l'installation peut comprendre un dispositif de prétraitement du support poreux avant son introduction entre la première et la deuxième électrode de manière à ce que ledit support ait une résistivité électrique augmentée. Pour cela, le dispositif de prétraitement peut intégrer un dispositif de séchage et/ou un dispositif de chauffage permettant de traiter un support poreux avant son introduction dans l'installation, en favorisant l'évacuation et/ou l'évaporation d'une humidité résiduelle présente dans ledit support. Par exemple, le séchage d'une fibre hydrophile comme le coton permet d'augmenter sa résistivité électrique et donc de limiter les risques de formation de décharges électriques entre les électrodes, lors de son imprégnation par une poudre de polypropylène. De même, le passage d'un tapis en fibres polyester dans une enceinte climatique régulée avec un taux inférieur à 40% d'humidité relative permet d'augmenter sa résistivité électrique, ce qui permet d'améliorer la qualité et la vitesse d'imprégnation du tapis par de la poudre époxyde par exemple.

En général, l'installation comprend un dispositif de dépôt de poudre permettant de déposer ladite poudre au contact d'un support poreux avant son passage entre la première et la deuxième électrodes de l'installation. Le dispositif de dépôt est de préférence agencé entre le dispositif de prétraitement mentionné ci-dessus et les électrodes. Toutefois, la configuration de l'invention peut également être utilisée lorsque la poudre est pré-déposée à la surface du support avant le dispositif de prétraitement.

La présente demande concerne également un procédé d'imprégnation d'un support poreux par une installation telle que décrite ci-dessus, qui peut comprendre avant l'application d'un champ électrique alternatif à travers le support poreux, une étape préalable de séchage à l'air sec ou de chauffage dudit support. Cette étape est préférentiellement :
- un chauffage lorsque le support comprend des fibres hydrophiles, comme par exemple des fibres naturelles ou cellulosiques ;
- un séchage à l'air sec lorsque le support comprend des fibres hydrophobes, comme par exemple des fibres synthétiques recouvertes d'un ensimage antistatique, sensible à l'humidité.

### DESCRIPTION DES FIGURES

L'invention sera mieux comprise à la lecture de la description qui suit, donnée uniquement à titre d'exemple indicatif et non limitatif, et réalisée en relation avec les dessins annexés, dans lesquels les mêmes références désignent des éléments identiques ou analogues et dans lesquels :
- la figure 1A est un schéma d'une coupe longitudinale d'un exemple de réalisation d'une installation d'imprégnation selon l'invention ;
- la figure 1B est un schéma d'une coupe longitudinale d'un autre exemple de réalisation d'une installation d'imprégnation selon l'invention ;
- la figure 1C est un schéma d'une coupe longitudinale d'un autre exemple de réalisation d'une installation d'imprégnation selon l'invention ;
- la figure 1D est un schéma d'une coupe longitudinale d'un autre exemple de réalisation d'une installation d'imprégnation selon l'invention ;
- la figure 2 représente la variation en fonction du temps de la température d'éléments en contact avec les électrodes d'une installation selon l'état de la technique et les électrodes d'une installation illustrée à la figure 1 ;
- la figure 3 représente une variante de réalisation de l'installation illustrée à la figure 1A ;
- la figure 4 représente une variante de réalisation de l'installation illustrée à la figure 3 ;
- les figures 5A et 5B sont des coupes longitudinales d'une installation générant un plasma, représentant la répartition du plasma entre les électrodes, respectivement selon l'art antérieur et selon un mode de réalisation de l'invention ;
- la figure 6 représente une variante de réalisation de l'installation illustrée à la figure 4 ;
- les figures 7A et 8A sont des coupes longitudinales d'une installation selon l'invention générant un plasma, représentant la répartition du plasma entre les électrodes en fonction du taux d'humidité d'un support poreux présent entre lesdites électrodes ;
- les figures 7B et 8B sont respectivement des vues de dessus des supports poreux représentés sur les figures 7A et 8A, après leur passage entre les électrodes et leur imprégnation par de la poudre.

### EXEMPLES DE REALISATION DE L'INVENTION

Pour rappel, la présente demande vise à proposer une installation d'imprégnation d'un support poreux par de la poudre, présentant une meilleure tenue au vieillissement et permettant la formation d'un champ électrique plus homogène pour favoriser une imprégnation plus régulière de la poudre dans le support poreux.

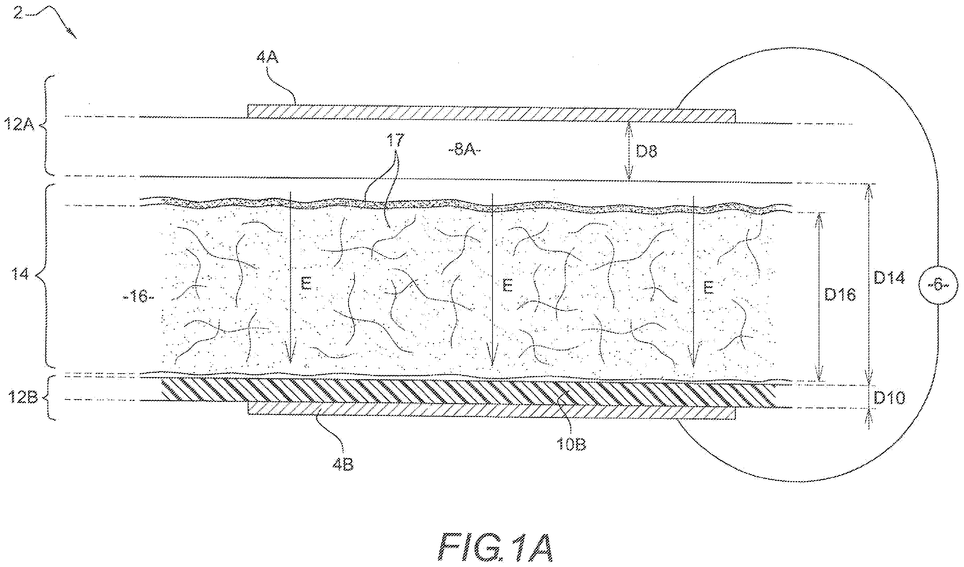

Un exemple de réalisation d'une installation d'imprégnation **2** selon l'invention est schématisé à la figure 1A. Selon cet exemple, l'installation comporte deux électrodes **4A** et **4B** en vis-à-vis et sensiblement parallèles entre elles. Une première électrode **4A** est au contact d'un écran **8A** caractérisé par une rigidité diélectrique supérieure à 6 kV/mm.

L'écran **8A** permet d'isoler électriquement les électrodes l'une de l'autre. L'épaisseur **D8** de l'écran peut être adaptée pour porter l'électrode **4A**. Pour cela, son épaisseur peut être comprise entre 1 et 20mm. Dans le cas présent, l'écran **8A** est une plaque en quartz dont l'épaisseur est égale à 5mm.

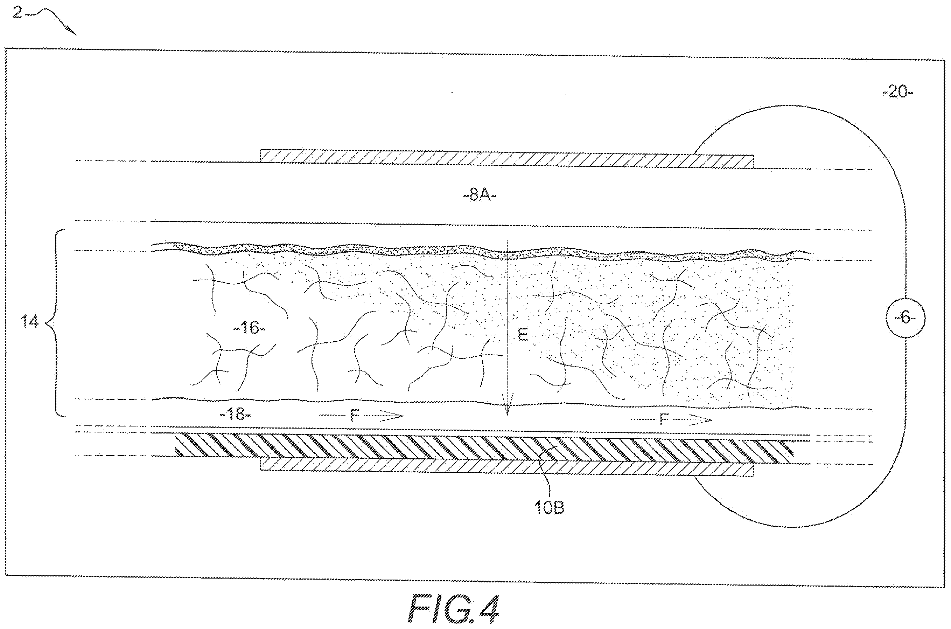

Une deuxième électrode **4B** de l'installation est recouverte d'une couche de protection **10B** caractérisée par une résistivité superficielle électrique supérieure à 1x10¹²Ω/□. La résistivité superficielle électrique ou résistivité de surface caractérise la capacité d'un matériau à ralentir la circulation d'un courant à sa surface en présence d'une différence de potentiel. La résistivité superficielle électrique se mesure selon la norme « ASTM D 257 - 99 » en utilisant des électrodes concentriques décrites en figure 4 de la norme. La valeur de la résistivité superficielle électrique s'exprime en Ohm ou en Ohm/□ pour indiquer qu'il s'agit d'une résistivité de surface. En d'autres termes, une surface présentant une résistivité de surface élevée se caractérise par une faible mobilité des électrons à sa surface.

La couche de protection **10B** en contact avec la deuxième électrode **4B** permet donc de façon avantageuse de limiter le déplacement des charges électriques à sa surface, afin d'éviter localement des concentrations de charges susceptibles de former des points de potentiel favorables à l'établissement de décharges électriques entre les électrodes **4A** et **4B**. De ce fait, les charges électriques présentes sur sa surface ont donc plus de difficultés à s'agréger pour former localement des points de potentiel élevés, par rapport à des charges électriques présentes à la surface par exemple d'un écran en quartz.

L'épaisseur **D10** de la couche de protection **10B** peut être comprise entre quelques centièmes et plusieurs millimètres. Selon le présent exemple, la couche de protection est réalisée à partir de silicone dont l'épaisseur est d'environ égale à 1mm.

Les électrodes **4A** et **4B** sont agencées de manière à délimiter un passage **14** pour un support poreux **16**. L'installation peut comprendre un dispositif réglable de type à crémaillère ou autre (non représenté sur les figures), permettant de contrôler la distance **D14** séparant les couches de protection. Cette distance peut être comprise entre 1 et 50mm. Dans l'exemple ici considéré, la distance **D14** est égale à 15mm.

Les électrodes **4A** et **4B** sont de préférence des plaques conductrices uniformes, de manière à favoriser l'établissement d'un champ électrique homogène entre elles. Ces électrodes conductrices peuvent par exemple être constituées de plaques en cuivre ou en aluminium, de dépôts métalliques réalisés sous vide, de laque d'argent ou tous autres conducteurs appropriés.

L'invention ne se limite pas une forme et à un agencement particulier d'électrodes. Les électrodes peuvent être pleines ou ajourés, et de formes multiples comme par exemple être de forme concave ou convexe ou tubulaire, et comprendre éventuellement plusieurs éléments conducteurs reliés ensemble. Par exemple, l'invention peut comprendre des électrodes discontinues et constituées d'une rangée de bandes conductrices, telles que décrites dans le document FR 2 933 327 en pages 5 et 6.

Selon un autre mode de réalisation de l'invention non représenté sur les figures, la première électrode et/ou la deuxième électrode peuvent être remplacées par une succession d'électrodes tubulaires de différentes sections, permettant d'appliquer un champ électrique à travers un support poreux passant entre lesdites électrodes. Dans ce cas, une première série d'électrodes peut être recouverte par un écran présentant une rigidité diélectrique supérieure à 6kV/mm, et la deuxième série d'électrodes peut être recouverte d'une couche de protection ayant une résistivité superficielle supérieure à 1x10¹²Ω/□. Comme pour les figures 1A à 1D, la première série d'électrodes peut éventuellement avoir en plus de son écran, une couche de protection ayant une résistivité superficielle supérieure à 1x10¹²Ω/□, et la deuxième série d'électrodes peut avoir un écran interposé entre les électrodes et la couche de protection, l'écran présentant une rigidité diélectrique supérieure à 6kV/mm. Les première et deuxième séries d'électrodes peuvent être interverties.

Selon un autre mode de réalisation de l'invention non représenté sur les figures, la première électrode **4A** peut être de forme cylindrique et pivoter autour de son axe de révolution, la deuxième électrode **4B** peut être constituée de plusieurs électrodes de forme tubulaire comprenant un écran en verre de section rectangulaire, métallisé intérieurement, et disposé en vis-à-vis de la première électrode **4A.** Le cylindre composant la première électrode **4A** est revêtu d'une couche de silicone servant de couche de protection **10A**. La couche de protection et/ou l'écran en verre peuvent présenter des aspérités ou un relief à leur surface de manière à pouvoir stocker de façon provisoire de la poudre avant de libérer ladite poudre dans un espace formé entre la première et la deuxième électrodes **4A** et **4B**.

Pour permettre la génération d'un champ électrique **E** entre les électrodes, elles sont connectées à un même générateur de tension alternative **6**, apte à délivrer une tension comprise entre 1 et 100kV, à une fréquence comprise entre 1 et 1000 Hz.

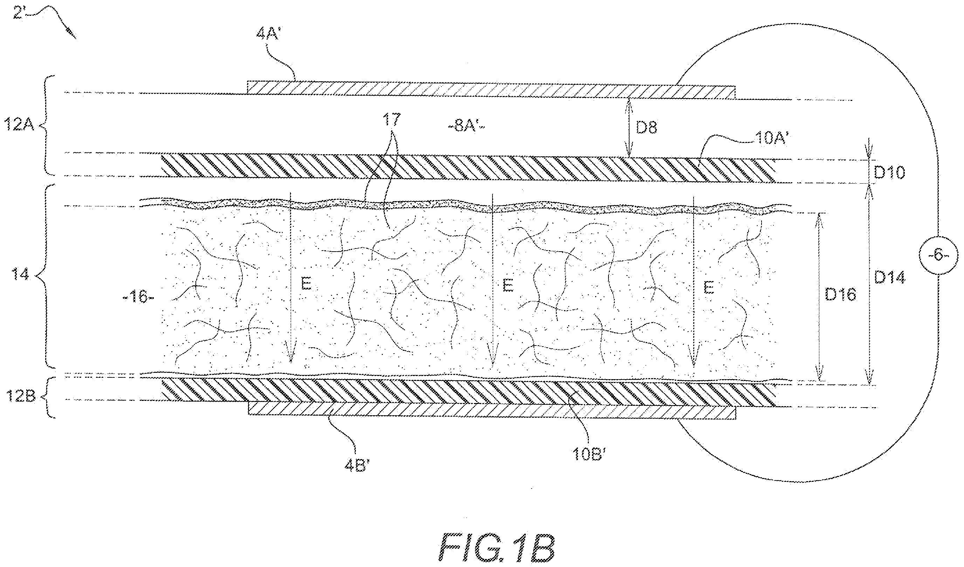

La figure 1B illustre un autre mode de réalisation d'une installation d'imprégnation **2'** selon l'invention, comportant deux électrodes **4A'** et **4B'** en vis-à-vis et sensiblement parallèles entre elles. Une première électrode **4A'** est au contact d'un écran **8A'** de caractéristiques similaires à l'écran **8A** décrit ci-dessus. Une deuxième électrode **4B'** et l'écran **8A'** sont respectivement recouverts par une couche de protection **10B'** et une couche de protection **10A'**. Les couches de protections sont similaires à la couche de protection **10B.** De façon avantageuse, une couche de protection est déposée sur chaque électrode pour renforcer l'homogénéité du champ électrique généré entre lesdites électrodes.

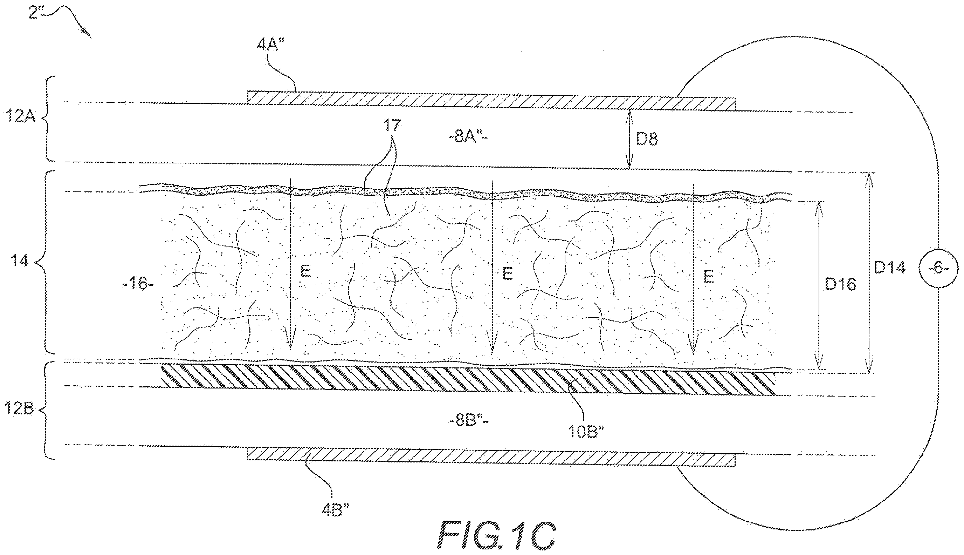

La figure 1C illustre un autre mode de réalisation d'une installation d'imprégnation **2"** selon l'invention, comportant deux électrodes **4A"** et **4B"** en vis-à-vis et sensiblement parallèles entre elles. Une première électrode **4A"** et une deuxième électrode **4B"** sont respectivement au contact d'un écran **8A"** et **8B"** de caractéristiques similaires à l'écran **8A** décrit ci-dessus. L'écran **8B"** au contact de la deuxième électrode **4B"** est recouvert par une couche de protection une couche de protection **10B"** similaire à la couche de protection **10B**. De façon avantageuse, les écrans **8A"** et **8B"** au contact de chaque électrode permettent de générer entre les dites électrodes un champ électrique d'amplitude plus importante par rapport à l'installation d'imprégnation 2' représentée à la figure 1B.

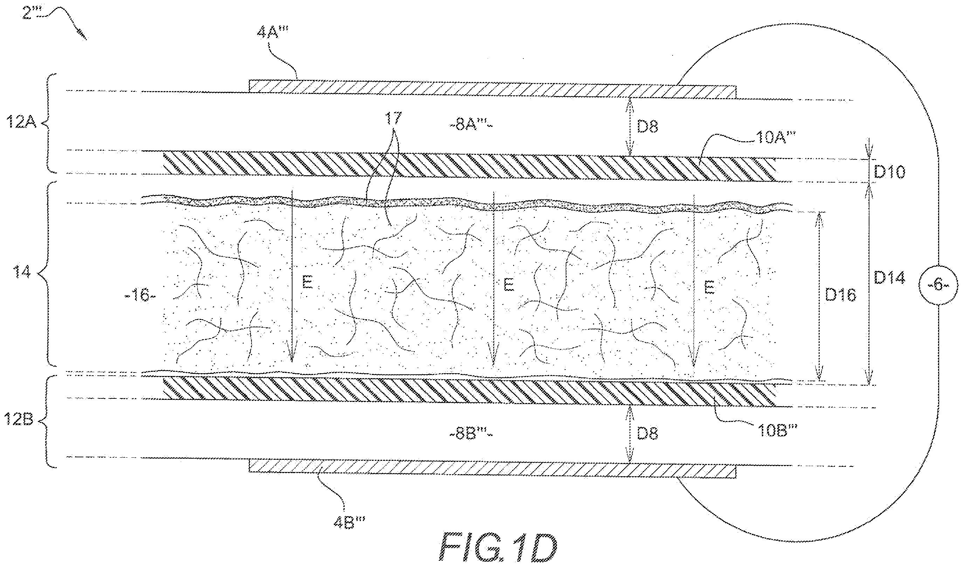

La figure 1D illustre une variante de réalisation d'une installation d'imprégnation **2'"** selon l'invention comportant deux électrodes **4A'"** et **4B'"** en vis-à-vis et sensiblement parallèles entre elles. Chaque électrode est au contact d'un écran **8A'"** et **8B"'**, les écrans étant respectivement recouverts par une couche de protection **10A'"** et **10B"'**. Les écrans et les couches de protection ont des caractéristiques similaires à ceux mentionnés ci-dessus. Selon ce présent exemple de réalisation, chaque électrode est au contact d'un écran de manière à améliorer l'isolation électrique entre lesdites électrodes pour permettre d'augmenter l'amplitude du champ électrique entre les électrodes. Ces deux écrans sont recouverts chacun d'une couche de protection **10A'"** et **10B'"** pour permettre d'homogénéiser le champ électrique entre les électrodes **4A'"** et **4B"'**.

Le support poreux **16** passant entre les électrodes composant les installations décrites ci-dessus peut être par exemple un réseau de fibres synthétiques et/ou naturelles, un non tissé ou un tissu, un papier, voire une mousse à cellules ouvertes. Le support poreux peut par exemple être un tapis aiguilleté composé de polyester ou de fibres naturelles comme du coton, du chanvre, de la laine ou autre.

La poudre **17** imprégnant le support poreux **16** peut être une poudre du type thermoplastique ou thermodurcissable, comme par exemple une poudre de polyamide ou une poudre d'époxyde. Le terme « poudre » peut désigner un mélange de poudre de natures et de granulométries différentes.

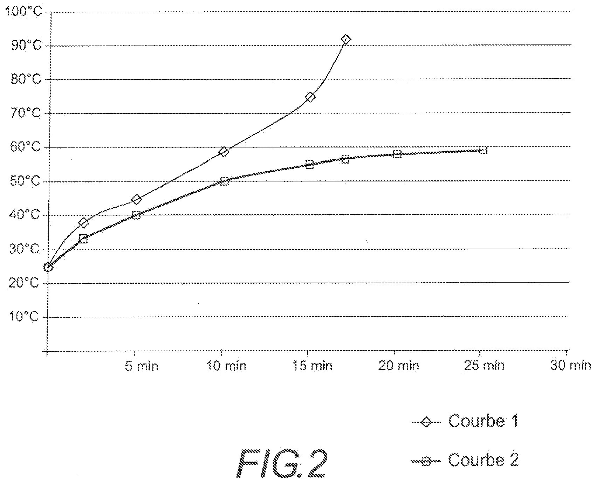

La figure 2 illustre un avantage lié à l'utilisation des couches de protection décrite ci-dessus dans une installation d'imprégnation. Plus précisément, la figure 2 présente des courbes de variations de température mesurées sur des écrans d'une installation selon l'état de la technique ne comprenant pas de couche de protection, et une installation selon l'invention illustrée à la figure 1D. Bien entendu, les mesures de température sont effectuées dans les mêmes conditions d'utilisation et selon les mêmes agencements pour les deux types d'installation. Plus précisément, les verres en contact des électrodes ont une épaisseur de 3mm et sont espacés d'une distance de 20mm. Une tension de 45kV à 50Hz est appliquée entre les électrodes. On observe sur la figure 2 une augmentation soudaine de la température des écrans de verre après 15 minutes d'utilisation de l'installation lorsqu'ils ne sont pas recouverts par des couches de protection telles que décrites ci-dessus (courbe 1), jusqu'à une température supérieure à 90°C où on observe le claquage desdits écrans. A l'inverse, lorsque les écrans de verre **8A'"** et **8B'"** sont respectivement recouverts par une couche de protection **10A'"** et **10B'"**, la température des écrans de verre ne dépasse pas 60°C (courbe 2) et aucune décharge électrique n'est observée entre les électrodes **4A'"** et **4B"'**. Les couches de protection permettent donc de limiter le risque de claquage de l'installation dans le temps. Plus précisément, plus la résistivité des couches de protection est importante, plus faible est ce risque de sorte que l'installation selon l'invention a une meilleure tenue au vieillissement.

Un autre avantage lié à la valeur de résistivité superficielle électrique des couches de protection, est de permettre l'établissement d'un champ électrique **E** plus homogène dans le passage **14** formé entre la première et la deuxième électrode de l'installation. En effet, le champ électrique est plus fidèle à l'agencement des électrodes car les charges électriques créées par les électrodes se déplacent faiblement à la surface de la ou des couches de protection. Ainsi, la répartition des charges générées par exemple à la surface de l'électrode **4B** à la figure 1A est sensiblement la même au niveau de la surface de la couche de protection **10B** délimitant le passage **14**. L'imprégnation d'un matériau poreux peut de cette façon être mieux contrôlée.

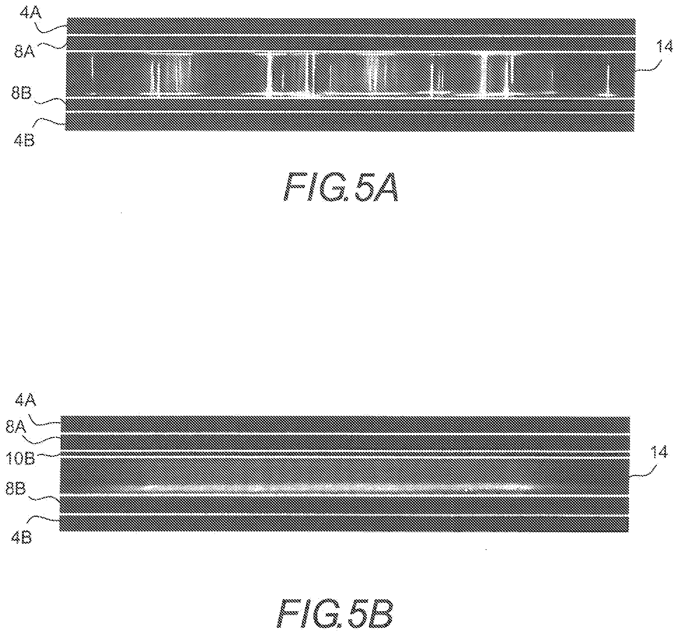

Comme le montre la figure 5B, on génère un champ électrique de 4 kV/mm qui est plus homogène entre la première et la deuxième électrode dans la configuration de la figure 1C, par comparaison à une configuration de l'art antérieur, dans laquelle les électrodes ne sont recouvertes que par un écran diélectrique de type couche de verre comme illustré à la figure 5A. On constate en effet qu'il se forme entre les électrodes moins de décharges électriques matérialisées par les bandes claires verticales sur la figure 5B correspondant à la configuration de l'invention, par rapport à la figure 5A illustrant l'art antérieur. Les figures 5A et 5B ont été prises pour des configurations avec les paramètres suivants :
- électrodes métalliques **4A**, **4B** de 5 mm d'épaisseur ;
- couche écran diélectrique **8A**, **8B** en verre de 5mm d'épaisseur.
- couche de protection **10B** en polytétrafluoroethylène (PTFE) de 2 mm d'épaisseur (présente uniquement sur la figure 5B).
- lame d'air **14** entre les faces des électrodes : 10mm.
- champs électrique appliqué entre les électrodes 4kV/mm AC sinusoïdal à 50Hz
- humidité relative ambiante 75%
- température ambiante : 19°C.

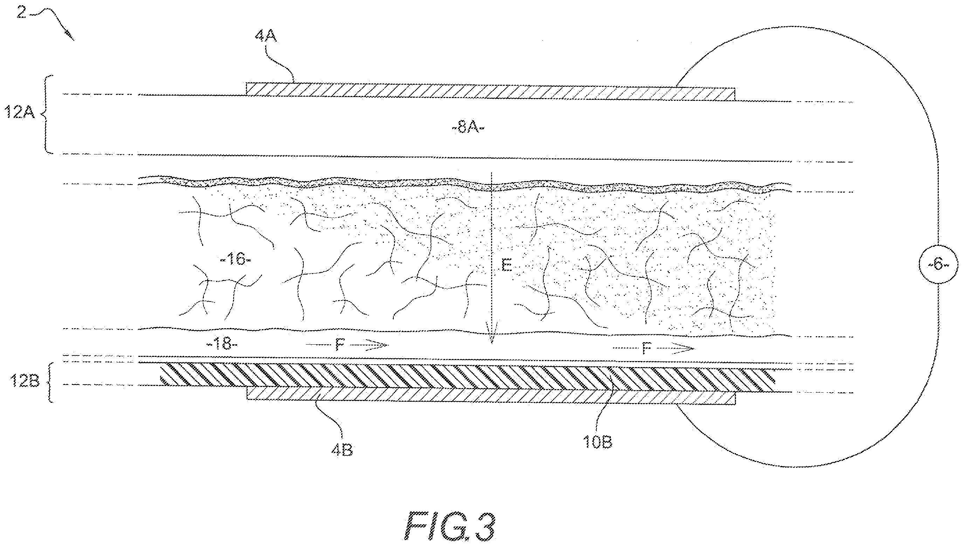

Selon une variante d'une installation d'imprégnation **2** telle que représentée en figure 1A, l'installation peut comprendre un dispositif d'entraînement **18** du support poreux **16** comme illustré à la figure 3. Par exemple, ce dispositif peut comprendre un convoyeur à bande sur lequel peut être déposé un support poreux, de manière à permettre le passage dudit support entre les électrodes selon le sens de progression **F**. Le dispositif d'entraînement peut par exemple déplacer le support poreux à des vitesses comprises entre 20 et 500 m/min qui sont supérieures aux vitesses d'imprégnation de l'art antérieure.

Selon une variante de l'installation représentée en figure 3, l'installation d'imprégnation peut comporter un dispositif spécifique **20** connu comme représenté en figure 4, de type enceinte de confinement permettant de contrôler les caractéristiques du gaz présent dans le passage **14**. Le dispositif spécifique peut par exemple contrôler le taux d'humidité relative et le maintenir entre 30% et 60 %, de préférence entre 30% et 50%.

La composition du gaz dans le passage **14** peut également être contrôlée par le dispositif spécifique **20** et comprendre par exemple un des gaz suivants : argon, azote, oxygène. La pression du gaz peut aussi être fixée par ledit dispositif dans une plage de valeur comprise entre 10⁻⁷ et 1000 mbar, de préférence entre 10⁻³ et 1000 mbar.

Il est à noter également que suivant les conditions d'amplitude et de temps d'application du champ électrique et du gaz présent dans le passage **14**, la présence d'un plasma est susceptible d'induire des modifications de la tension de surface des matières présentes entre la première et la deuxième électrodes (modification physico-chimique des matières). Cette modification des tensions de surface peut permettre, par exemple, d'augmenter le caractère hydrophile ou hydrophobe d'une matière.

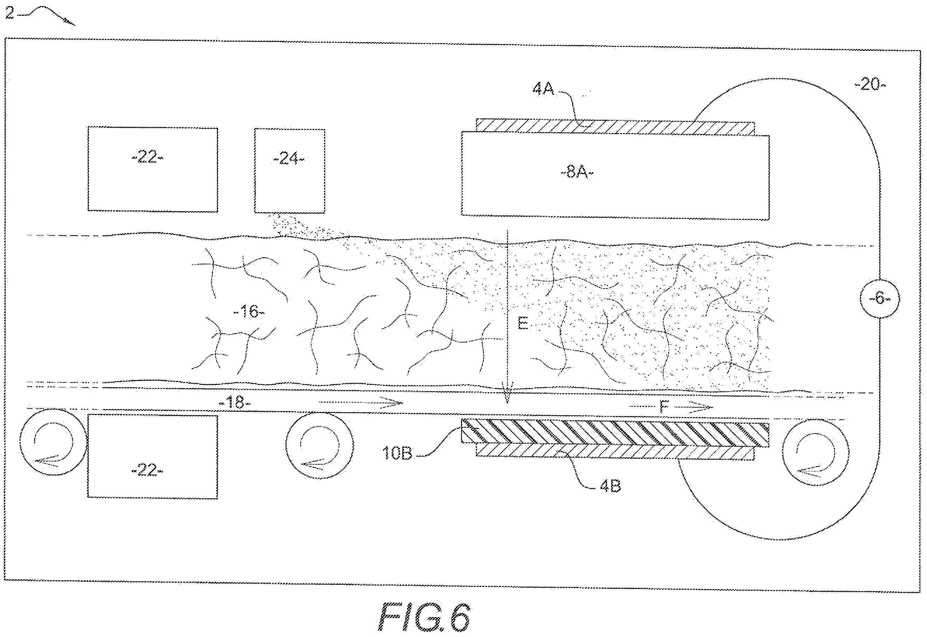

Selon une variante de l'installation représentée en figure 6, l'installation d'imprégnation **2** peut comprendre un dispositif de prétraitement **22** permettant de préparer le support poreux **16** avant son imprégnation. Le dispositif de prétraitement peut préparer le support poreux de sorte à contrôler la valeur de sa résistivité électrique volumique à une valeur supérieure à 10⁹Ω.cm, pour favoriser l'établissement d'un champ électrique homogène entre les électrodes. Par exemple, le dispositif de prétraitement peut préchauffer le support poreux pour abaisser son taux d'humidité et/ou diffuser de l'air sec à travers le support poreux. Il est également envisageable d'assurer un chauffage des électrodes afin de remonter la valeur de résistivité superficielle.

L'installation d'imprégnation peut comprendre un dispositif de dépôt **24** de la poudre **17** permettant de déposer la poudre au contact du support poreux **16** avant son passage entre les électrodes **4A** et **4B**. Le dispositif de dépôt est de préférence agencé entre le dispositif de prétraitement mentionné ci-dessus et les électrodes.

La présente demande concerne également un procédé d'imprégnation d'un support poreux par de la poudre, consistant à appliquer à un support poreux **16** recouvert de poudre **17**, un champ électrique compris entre 0,1 et 50kV/mm.

Le support poreux **16** peut être un réseau fibreux, comme par exemple un non tissé ou un tissu, un papier mais aussi une mousse à cellules ouvertes.

La poudre peut intégrer différents constituants en termes de composition chimique ou de granulométrie, et des adjuvants ou autres composés complémentaires destinés à conférer des propriétés spécifiques à la poudre.

Le procédé d'imprégnation peut comprendre une étape préliminaire de prétraitement du support poreux **16** par chauffage ou séchage par soufflage d'air sec à travers le support, pour permettre de limiter l'atténuation du champ électrique traversant ledit support. Cette étape peut consister à abaisser le taux d'humidité du support lorsque l'un de ces constituants est connu pour avoir un certain taux de reprise en humidité comme les fibres naturelles, le polyamide ou des ensimages antistatiques et sensibles à l'humidité. Cette étape de chauffage et/ou de séchage permet de façon avantageuse d'augmenter la résistivité électrique volumique du support poreux de sorte à perturber le moins possible le champ électrique, pour favoriser une imprégnation homogène de la poudre dans le support poreux. Par exemple, pour augmenter la résistivité électrique volumique de fibres naturelles composant le support à une valeur supérieure à 10⁹Ω.cm, le support peut préalablement être séché. Dans le cas où le support comporte des fibres synthétiques préalablement recouvertes d'un ensimage, présentant des caractéristiques antistatiques en présence d'humidité dans l'air, un prétraitement à l'air sec permet d'augmenter sa résistivité électrique volumique au-dessus de 1x10⁹ Ω.cm.

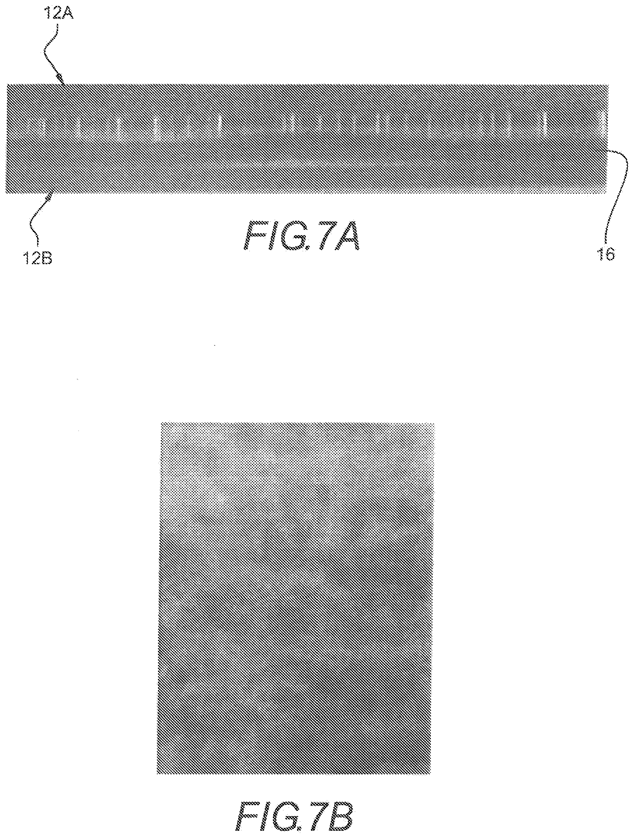

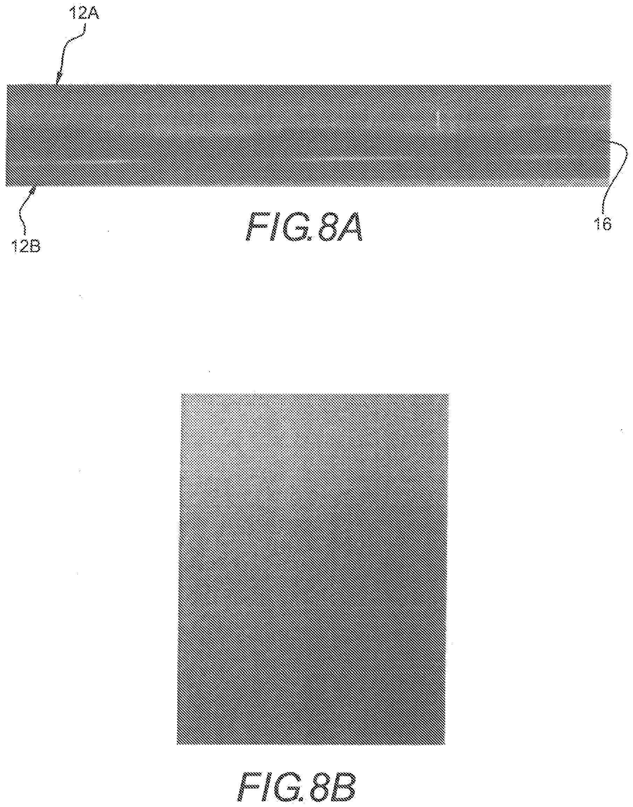

Les figures 7A et 8A illustre respectivement la répartition d'un champ électrique englobant un support poreux **16** avec un taux d'environ 70% d'humidité relative à 20°C et un support similaire conditionné de sorte que son taux soit égal à 32% d'humidité relative à 21°C. On observe sur la figure 8A une répartition plus homogène du champ électrique autour du support pré-conditionné par rapport à la figure 7A. Comme le montrent les figures 7B et 8B illustrant la répartition de la poudre respectivement au-dessus du support de la figure 7A et 8A, la poudre est imprégnée de façon plus homogène dans le support **16** lorsque son taux d'humidité est réduit.

Bien entendu, les procédés d'imprégnation ici décrits peuvent être mis en oeuvre par une ou plusieurs installations d'imprégnation **2**, **2'**, **2"** ou **2'"** présentées ci-dessus.

En conclusion, la présente demande propose une installation d'imprégnation d'un support poreux au moyen d'un champ électrique. L'installation comprend de façon avantageuse une ou deux couches de protection ainsi qu'un ou deux écrans diélectriques protégeant les électrodes de l'installation. Les couches de protection limitent le déplacement des charges électriques à leur surface, permettant ainsi de contrôler précisément la répartition du champ électrique entre lesdites couches dans l'espace et le temps. De ce fait, les phénomènes électriques dégradant l'installation, comme par exemple la formation de décharges électriques entre les électrodes, sont limités. Ainsi, l'installation a une meilleure tenue dans le temps. L'invention permet également la formation d'un champ électrique plus homogène entre ses électrodes de manière à favoriser une imprégnation plus régulière d'un support poreux recouvert de poudre passant entre lesdites électrodes.

## Revendications

1. Installation d'imprégnation (2, 2', 2", 2"') d'un support poreux (16) par de la poudre (17), incluant un dispositif (6) apte à générer un champ électrique alternatif à travers le support poreux, le dispositif comportant une première électrode (4A, 4A', 4A", 4A"') et une deuxième électrode (4B, 4B", 4B", 4B"') disposées de part et d'autre du support poreux :
- la première électrode (4A) étant recouverte par un écran (8A) venant au contact de l'électrode (4A), ledit écran présentant une rigidité diélectrique supérieure à 6kV/mm, et préférentiellement à 9kV/mm ;
- la deuxième électrode (4B) étant recouverte par une couche de protection (10B), ladite couche de protection présentant, une résistivité superficielle supérieure à 1x10¹²Ω/□, quel que soit le taux d'humidité relative,
**caractérisée en ce que** ladite couche de protection est solidaire de la seconde électrode.

2. Installation (2') selon la revendication 1, **caractérisée en ce que** la couche de protection (10B) présente une stabilité structurelle au-dessus de 250°C.

3. Installation (2') selon la revendication 1, **caractérisée en ce que** l'écran (8A') au contact de la première électrode (4A') est recouvert par une couche de protection (10A') venant au contact de l'écran (8A'), ladite couche de protection présentant une résistivité superficielle supérieure à 1x10¹²Ω/□.

4. Installation (2", 2"') selon la revendication 1, **caractérisée en ce qu'un** écran (8B", 8B"') est interposé entre la deuxième électrode (4B", 4B"') et la couche de protection (10B", 10B'"), ledit écran présentant une rigidité diélectrique supérieure à 6kV/mm.

5. Installation (2"') selon la revendication 4, **caractérisée en ce que** l'écran (8A"') est recouvert par une couche de protection (10A'"), ladite couche de protection présentant une résistivité superficielle supérieure à 1x10¹²Ω/□.

6. Installation selon l'une des revendications 1 à 5, **caractérisée en ce que** le champ électrique généré entre lesdites électrodes est compris entre 0,1 et 50 kV/mm.

7. Installation selon l'une des revendications 1 à 6, **caractérisée en ce qu'**un dispositif spécifique (20) maintient le taux d'humidité relative à moins de 60% entre lesdites électrodes, lorsque les électrodes sont mises sous tension.

8. Installation selon l'une des revendications 1 à 7, **caractérisée en ce qu'elle** comprend un dispositif d'entraînement (18) du support poreux entre lesdites électrodes.

9. Procédé d'imprégnation d'un support poreux (16) dans lequel le support poreux est introduit dans une installation d'imprégnation selon l'une des revendications 1 à 8, **caractérisé en ce qu'il** comprend une étape de chauffage du support poreux (16) préalable à l'application d'un champ électrique.

10. Procédé d'imprégnation d'un support poreux (16) dans lequel le support poreux est introduit dans une installation d'imprégnation selon l'une des revendications 1 à 8, **caractérisé en ce qu'il** comprend une étape de séchage à l'air sec du support poreux (16) préalable à l'application d'un champ électrique.

## Patentansprüche

1. Anlage zum Imprägnieren (2, 2', 2", 2'") eines porösen Trägers (16) durch Pulver (17), umfassend eine Vorrichtung (6), die in der Lage ist, ein elektrisches Wechselfeld durch das poröse Medium zu erzeugen kann, wobei die Vorrichtung eine erste Elektrode (4A, 4A', 4A", 4A'") enthält und eine zweite Elektrode (4B, 4B', 4B", 4B'"), angeordnet auf beiden Seiten des porösen Trägers
- die erste Elektrode (4A) ist von einem Schirm (8A) bedeckt, der Kontakt mit der Elektrode (4A) hat, dieser Schirm weist einen dielektrischen Widerstand von mehr als 6 kV/ mm auf und besser noch von mehr als 9kV/mm;
- die zweite Elektrode (4B) ist von einer Schutzschicht (10B) bedeckt ist, wobei diese Schutzschicht einen spezifischen Oberflächenwiderstand von mehr als 1 × 10¹² Ω/□, ungeachtet der relativen Feuchtigkeit,
**dadurch gekennzeichnet, dass** diese Schutzschicht fest mit der zweiten Elektrode verbunden ist.

2. Anlage (2') gemäß Anspruch 1, **dadurch gekennzeichnet, dass** die Schutzschicht (10B) eine strukturelle Stabilität bei über 250°C aufweist.

3. Anlage (2') gemäß Anspruch 1, **dadurch gekennzeichnet, dass** der Schirm (8A'), der Kontakt mit der ersten Elektrode (4A') hat, von einer Schutzschicht (10A') bedeckt ist, die Kontakt mit dem Schirm (8A') hat, wobei diese Schutzschicht einen spezifischen Oberflächenwiderstand von mehr als 1 × 10¹²Ω/□ aufweist.

4. Anlage (2', 2'") gemäß Anspruch 4, **dadurch gekennzeichnet, dass** ein Schirm (8B", 8B"') zwischen der zweiten Elektrode (4B", 4B'") und der Schutzschicht (10B", 10B"') angeordnet ist, dieser Schirm weist einen dielektrischen Widerstand von mehr als 6 kV/ mm auf.

5. Anlage (2'") gemäß Anspruch 1 bis 5, **dadurch gekennzeichnet, dass** ein Schirm (8A"') von einer Schutzschicht (10A'") bedeckt ist, wobei diese Schutzschicht einen spezifischen Oberflächenwiderstand von mehr als 1 × 10¹² Ω/□ aufweist.

6. Anlage (2') gemäß Anspruch 1, **dadurch gekennzeichnet, dass** das zwischen diesen Elektroden erzeugte elektrische Feld zwischen 0,1 und 50 kV/mm liegt.

7. Anlage gemäß einem der Ansprüche 1 bis 6, **dadurch gekennzeichnet, dass** eine spezielle Vorrichtung (20) die relative Feuchtigkeit bei mindestens 60% zwischen diesen Elektroden hält, wenn an diese Elektroden eine Spannung angelegt wird.

8. Anlage gemäß einem der Ansprüche 1 bis 7, **dadurch gekennzeichnet, dass** sie eine Vorrichtung (18) zum Antrieb dieses porösen Trägers zwischen diesen Elektroden enthält.

9. Imprägnierungsverfahren eines porösen Trägers (16), bei dem der poröse Träger in eine Imprägnieranlage nach einem der Ansprüche 1 bis 8 eingeführt wird, **dadurch gekennzeichnet, dass** es einen Schritt der Erwärmung des porösen Trägers (16) vor dem Anlegen eines elektrischen Feldes enthält.

10. Imprägnierungsverfahren eines porösen Trägers (16), bei dem der poröse Träger in eine Imprägnieranlage nach einem der Ansprüche 1 bis 8 eingeführt wird, **dadurch gekennzeichnet, dass** es einen Schritt der Trocknung des porösen Trägers (16) vor dem Anlegen eines elektrischen Feldes enthält.

## Claims

1. An apparatus (2, 2', 2", 2'") for impregnating a porous medium (16) with powder (17), including a device (6) able to generate an alternating electric field through the porous medium, the device including a first electrode (4A, 4A', 4A", 4A"') and a second electrode (4B, 4B", 4B", 4B'") which are placed on either side of the porous medium :
- the first electrode (4A) being covered with a screen (8A) coming into contact with the electrode (4A), said screen having a dielectric strength higher than 6 kV/mm, and preferably higher than 9 kV/mm;
- the second electrode (4B) being covered with a protective layer (10B), having a superficial resistivity higher than 1x10¹² Ω/□, irrespective of the relative humidity level,
**characterized in that** said protective layer is secured to the second electrode.

2. The apparatus (2') according to claim 1, **characterized in that** the protective layer (10B) has a structural stability above 250°C.

3. The apparatus (2') according to claim 1, **characterized in that** the screen (8A') in contact with the first electrode (4A') is covered with a protective layer (10A') coming into contact with the screen (8A'), said protective layer having a superficial resistivity above 1x10¹² Ω/□.

4. The apparatus (2", 2"') according to claim 1, **characterized in that** a screen (8B", 8B"') is inserted between the second electrode (4B", 4B"') and the protective layer (10B", 10B'"), said screen having a dielectric strength greater than 6 kV/mm.

5. The apparatus (2'") according to claim 4, **characterized in that** the screen (8A'") is covered with a protective layer (10A'"), said protective layer having a superficial resistivity above 1x10¹² Ω/□.

6. The apparatus according to any of claims 1 to 5, **characterized in that** the electric field generated between said electrodes is comprised between 0.1 and 50 kV/mm.

7. The apparatus according to any of claims 1 to 6, **characterized in that** a specific device (20) keeps the relative humidity level at less than 60% between said electrodes, when the electrodes are powered on.

8. The apparatus according to any of claims 1 to 7, **characterized in that** it comprises a driving device (18) for driving the porous medium between said electrodes.

9. A method for impregnating a porous medium (16), wherein the porous medium is introduced into an impregnating apparatus according to any of claims 1 to 8, **characterized in that** it includes a step for heating the porous medium (16) prior to the application of an electric field.

10. A method for impregnating a porous medium (16), wherein the porous medium is introduced into an impregnating apparatus according to any of claims 1 to 8, **characterized in that** it includes a step for drying the porous medium (16) with dry air prior to the application of an electric field.
